# EUROPÄISCHE PATENTSCHRIFT

(11) **EP 1 560 315 B1**
(45) Veröffentlichungstag und Bekanntmachung des Hinweises auf die Patenterteilung: **01.01.2014**
(21) Anmeldenummer: 05001679.9
(22) Anmeldetag: 27.01.2005
(51) Int. Cl.: H02K 7/00, H02K 7/116

(54) **Elektrische Antriebseinheit für ein Kraftfahrzeug**
Electrical drive unit for a vehicle
Unité motrice électrique pour un véhicule

(30) Priorität: 29.01.2004 DE 102004004617
(43) Veröffentlichungstag der Anmeldung: 03.08.2005
(60) Teilanmeldung: 10185868.6
(73) Patentinhaber: Magnet-Motor Gesellschaft für magnetmotorische Technik mbH, D-82319 Starnberg (DE)
(72) Erfinder: Müller, Anton, Dr., 82327 Tutzing (DE); Walter, Fritz, 82399 Raisting (DE); Ehrhart, Peter, Dr., 81375 München (DE); Steffen, Jens, 86932 Pürgen (DE)
(74) Vertreter: Klunker . Schmitt-Nilson . Hirsch

(56) Entgegenhaltungen:
- EP-A- 0 463 895
- EP-A- 1 158 652
- DE-A1- 4 214 716
- DE-A1- 10 156 269
- DE-A1- 19 805 679
- US-A- 5 382 854

## Beschreibung

Gegenstand der Erfindung ist eine elektrische Antriebseinheit für ein Kraftfahrzeug, die aufweist:
(a) einen Elektromotor mit einem drehfest festgelegten Motorgehäuse;
(b) einen in dem Motorgehäuse befestigten Stator des Elektromotors, wobei der Stator bewickelte Pole aufweist;
(c) einen innerhalb des Stators angeordneten Rotor des Elektromotors, wobei zwischen den Polflächen des Stators und dem den Polflächen des Stators zugewandten Außenumfang des Rotors ein Luftspalt besteht;
(d) ein Planetengetriebe mit einem Sonnenrad, einem Planetenträger, Planetenrädern und einem Hohlrad,
(e) wobei der Rotor des Elektromotors und das Sonnenrad des Planetengetriebes für Drehmomentübertragung in Verbindung stehen;
(f) ein Getriebegehäuse des Planetengetriebes, wobei das Getriebegehäuse an dem Motorgehäuse befestigt ist oder - mindestens zum Teil - ein integraler Bestandteil des Motorgehäuses ist;
(g) und das Merkmal, dass die Planetenräder einen derartigen größten Durchmesser und eine derartige axiale Positionierung haben, dass ein gedachter gemeinsamer Hüllzylinder für alle größten Durchmesser der Planetenräder sich radial innerhalb der an einer Axialseite des Stators vorhandenen Wickelköpfe und axial neben dem an den Luftspalt anschließenden Bereich des Rotors befindet und dass die Planetenräder entweder gar nicht oder mit weniger als 50% ihrer Zahnbreite des Eingriffs mit dem Sonnenrad in Axialrichtung nach außen über die genannten Wickelköpfe hinausragen.

Man kennt bereits elektrische Antriebseinheiten für Kraftfahrzeuge, bei denen ein Elektromotor und ein Planetengetriebe vereinigt sind. Derartige Antriebseinheiten wurden bisher mit Elektromotoren konzipiert, die mit einem Außenrotor gebaut waren, was im Interesse hoher Drehmomentabgabe des Elektromotors prinzipbedingt Vorteile verspricht.

Aus der DE 42 14 716 A1, EP 0 463 895 A1 und EP 1 158 652 A2 sind elektrische Antriebseinheiten mit außen liegendem Stator und innen liegendem Rotor bekannt. Die aus der DE 42 14 716 A1 bekannte Antriebseinheit weist ein integrales Planeten-Untersetzungsgetriebe auf. Die als nächstliegender Stand der Technik angesehene EP 1 158 652 A2 weist einen mit Wicklungen versehenen Stator, einen ebenfalls mit Wicklungen versehenen Rotor und ein mit Stufenplanetenrädern versehenes Planetengetriebe auf. Erste, durchmessergrößere Teilbereiche der Stufenplanetenräder, die mit einem Sonnenrad des Planetengetriebes kämmen, sind vollständig innerhalb eines axial zurückgesetzten Raums des Rotors angeordnet. Zweite, durchmesserkleinere Teilbereiche der Planetenräder, die mit einem Hohlrad des Planetengetriebes kämmen, sind durch einen Planetenträger getrennt axial weiter außen angeordnet als die ersten Teilbereiche.

Die Erfindung löst die Aufgabe, eine möglichst Platz sparende elektrische Antriebseinheit bereitzustellen.

Diese Aufgabe wird gelöst durch ein elektrisches Antriebseinheit gemäß Anspruch 1.

Die erfindungsgemäße Bauweise mit Elektromotor mit Innenrotor ergibt zwar prinzipbedingt ein geringeres Abgabe-Drehmoment des Elektromotors, aber die im Anfangsabsatz angegebene Eingliederung des Planetengetriebes in die Antriebseinheit schafft die Möglichkeit, äußerst platzsparend eine hohe Übersetzung ins Langsame unterzubringen, so dass man auf diese Weise zu einem erwünscht hohen Abgabe-Drehmoment der Antriebseinheit kommt. Der Innenrotor lässt sich auf unkompliziert verlaufendem Weg des Drehmomentflusses an das Sonnenrad des Planetengetriebes ankoppeln. Die angesprochene Art der Eingliederung des Planetengetriebes in den Elektromotor bzw. die Antriebseinheit führt zu einer außerordentlich kompakten Antriebseinheit. Die Abdichtung des Motorinnenraums nach außen gestaltet sich äußerst einfach; man kann problemlos zu einer wasserdichten Ausführung des Elektromotors kommen. Die erfindungsgemäße Konzeption der Antriebseinheit führt dazu, dass die Radantriebseinheit mechanisch und von der Schachtelung der Bauteile her sehr unkompliziert aufgebaut ist und dass sich die Lagerungen an günstigen Stellen befinden; dies ist für eine gewichtsparende Bauweise von Vorteil. Außerdem lässt sich auf ganz einfache Weise eine Getriebekühlung durch Wärmeleitung zum Motorgehäuse des Elektromotors erreichen. Insgesamt ergibt sich ein Aufbau, der unter den Gesichtspunkten der leichten Herstellbarkeit, der leichten Montage, der Wartungsfreundlichkeit, der hohen Leistungsdichte, der hohen Drehmomentdichte, der Betriebssicherheit, der erreichbaren Gewichtsminderung, der Kühlung des Planetengetriebes und der guten Abdichtung nach außen äußerst vorteilhaft ist. Vorteile dieser Art werden weiter unten bei der Beschreibung eines Ausführungsbeispiels noch augenfälliger werden.

Das Kraftfahrzeug ist vorzugsweise ein nicht-schienengebundenes Kraftfahrzeug, z.B. ein sich direkt auf Land-Untergrund fortbewegendes Kraftfahrzeug.

Der Land-Untergrund kann eine befestigte Straße oder andere befestigte Fläche (z.B. Flughafen-Vorfeld) sein. Aus der weiteren Beschreibung wird aber noch deutlicher werden, dass das Kraftfahrzeug bevorzugt eines ist, welches gut auf unbefestigtem Untergrund fahren kann, insbesondere landwirtschaftliches Gelände, waldiges Gelände, freie Landschaft, Expeditionswege, gerölliges Gelände, sandiges Gelände, und vieles mehr. Als konkretere Beispiele derartiger Kraftfahrzeuge seien geländetaugliche Personenwagen, Fahrzeuge für Expeditionen in unwegsames Gelände, Lastkraftwagen, Baufahrzeuge, die bei Erdarbeiten eingesetzt werden, genannt. Das Kraftfahrzeug kann ein Kraftfahrzeug mit nur einer angetriebenen Achse oder ein Kraftfahrzeug mit zwei in Längsrichtung des Kraftfahrzeugs beabstandeten, angetriebenen Achsen, oder auch ein Fahrzeug mit noch mehr angetriebenen Achsen sein. Besonders hervorgehoben wird die Möglichkeit des allradgetriebenen Kraftfahrzeugs, bei dem jedes Rad eine elektrische Antriebseinheit besitzt.

Die elektrische Antriebseinheit benötigt naturgemäß Strom, um das Kraftfahrzeug antreiben zu können. Für die Zurverfügungstellung von Strom gibt es eine Reihe von Möglichkeiten: Aus einer Oberleitung mit Stromabnehmern (wie man es von Oberleitungs-Omnibussen her kennt), Stromerzeugungsaggregat (angetrieben durch Verbrennungsmotor im weitesten Sinne, insbesondere Dieselmotor, Ottomotor, Gasturbine) an Bord des Kraftfahrzeugs, Stromspeicher an Bord des Kraftfahrzeugs, Brennstoffzelle. Kombinationen dieser "Stromquellen" sind möglich, insbesondere Stromerzeugungsaggregat plus Stromspeicher zur Abdeckung von Spitzenlast und/oder zur kurzzeitigen, abgasfreien Fahrt.

Der Rotor des Elektromotors ist vorzugsweise ein unbewickelter Rotor, so dass zwischen dem Rotor und den nicht-drehenden Teilen der Antriebseinheit keine für Strom leitende Verbindung bestehen muss.

Im Anfangsabsatz befindet sich die Aussage, "dass die Planetenräder mit weniger als 50% ihrer Zahnbreite des Eingriffs mit dem Sonnenrad in Axialrichtung nach außen über die genannten Wickelköpfe hinausragen". Bevorzugt ist, wenn dieses Hinausragen weniger als 30% dieser Zahnbreite beträgt, stärker bevorzugt weniger als 10% dieser Zahnbreite.

Bei der erfindungsgemäßen Antriebseinheit ist das Planetengetriebe vorzugsweise so ausgeführt, dass das Hohlrad drehfest ist und der rotierbare Planetenradträger für den Getriebeabtrieb vorgesehen ist. Das Ausführungsbeispiel der Erfindung wird zeigen, dass bei der Erfindung das Hohlrad sehr einfach und günstig am Getriebegehäuse eingebunden werden kann. Die Planetenräder sind Stufenplanetenräder, was die Erreichung einer großen Übersetzung ins Langsame in dem Planetengetriebe ermöglicht. Die Stufenplanetenräder ragen mit ihrem kleinen Außendurchmesser in einen Raum des Rotors, der gegenüber der Stirnseite des Rotors, die an dem an den Luftspalt anschließenden Bereich des Rotors gegeben ist, axial zurückgesetzt ist. Dies dient einer ungemein Platz sparenden Unterbringung des Planetengetriebes.

Es ist möglich, bei der Antriebseinheit ein Getriebe mit mehr als einer Stufe unterzubringen, also z.B. zusätzlich zu der bisher beschriebenen Planetengetriebestufe eine Stirnradstufe oder auch eine weitere Planetengetriebestufe vorzusehen. Aus Platzgründen ist jedoch bevorzugt, dass die Drehzahl des Elektromotors nur mit der beschriebenen Planetengetriebestufe ins Langsame übersetzt wird.

Vorzugsweise ist die Antriebseinheit so aufgebaut, dass ein zentraler Achsstummel vorgesehen ist, an dem das Motorgehäuse befestigt ist und/oder mit dem das Motorgehäuse - mindestens zum Teil - ein integrales Bauteil ist; und dass der Rotor auf dem Achsstummel gelagert ist. Das Achsstummel-Bauteil kann zugleich dasjenige Bauteil sein, mit welchem die gesamte Antriebseinheit an dem Kraftfahrzeug befestigt ist.

Vorzugsweise ist das Sonnenrad ein außenverzahntes Hohlrad, welches der Achsstummel durchsetzt. Normalerweise strebt man bei Planetengetrieben, die eine hohe Übersetzung liefern sollen, ein Sonnenrad mit möglichst geringem Durchmesser an. Bei der gerade angesprochenen Weiterbildung der Erfindung ergibt sich notwendigerweise ein Sonnenrad mit nicht besonders kleinem Durchmesser, weil ja der normalerweise kräftige Achsstummel hindurchgeführt ist. Ein Sonnenrad mit vergleichsweise größerem Durchmesser hat allerdings den Vorteil des geringeren Verschleißes. Das im Anfangsabsatz genannte Merkmal (g) führt dazu, dass Planetenräder mit vergleichsweise großem Außendurchmesser vorgesehen werden können. Im Verein mit dem bevorzugten Vorsehen von Stufenplanetenrädern kommt man - trotz des Sonnenrads mit vergleichsweise großem Durchmesser - zu einem Planetengetriebe mit hoher Übersetzung. Bevorzugt ist die Überssetzung ins Langsame mehr als 5:1, strärker bevorzugt mehr als 7:1, stärker bevorzugt mehr als 8:1, noch stärker bevorzugt mehr als 9:1.

Vorzugsweise ist auf dem Achsstummel, in einer Position axial neben dem Elektromotor und dem Planetengetriebe, ein Radträger drehbar gelagert. Auf diese Weise entsteht eine insgesamt extrem kompakte und mechanisch günstig aufgebaute Rad-Antriebseinheit. Vorzugsweise ist der Radträger ein solcher, an dem eine Reifenfelge, insbesondere eine Standardfelge, befestigbar ist. Es wird jedoch betont, dass der Begriff "Radträger" nicht zwingend einen für die Befestigung einer Reifenfelge geeigneten Radträger bedeutet. Es könnte sich z.B. auch um einen Radträger für ein Kettenrad handeln.

Vorzugsweise ist die Abdichtung zwischen einem rotierbaren Teil an der Abtriebsseite des Planetengetriebes und dem Getriebegehäuse an einer Stelle positioniert, die radial weiter außen als ein Lager des Radträgers ist, wobei vorzugsweise die Abdichtung nicht axial über dieses Lager hinausragt. Auf diese Weise wird für die Abdichtung des rotierbaren Teils praktisch kein Platz in Axialrichtung der Antriebseinheit verbraucht. Außerdem wird erreicht, dass die Abdichtung und gewünschtenfalls die Kopplungsstelle zwischen dem Abtrieb des Planetengetriebes und dem im Drehmomentpfad anschließenden Bauteil an einer Stelle liegt, die sehr geringe Verformungen unter äußeren Kräften erfährt. Dies erhöht die Funktionssicherheit und macht Ausgleichselemente, wie (elastische) Kupplungen, entbehrlich.

Vorzugsweise ist ein Teil des Motorgehäuses, der die Außenumfangswand und einen radial äußeren Bereich einer Stirnwand enthält, von der Antriebseinheit demontierbar, so dass der Stator mit demontiert wird und, vorzugsweise, ein radial äußerer Bereich des Rotors anschließend von der Antriebseinheit demontierbar ist. Diese Demontierbarkeit des Stators ist vorzugsweise in Richtung von dem Planetengetriebe weg möglich; es sind aber auch Ausführungen möglich, bei denen die Demontierbarkeit des Stators in der umgekehrten Axialrichtung gegeben ist.

Vorzugsweise ist ein Bereich des Rotors, der auf der anderen Axialseite des Rotors als das Planetengetriebe liegt, als Trommel einer Trommelbremse ausgebildet. Der erfindungsgemäß vorgesehene Innenrotor des Elektromotors bietet diese Möglichkeit auf besonders einfache Art, ohne dass zusätzlich Platz beansprucht wird. Das Bremsen am Rotor hat den Vorteil, dass das Bremsmoment durch das Planetengetriebe ins Hohe übersetzt wird, so dass die Bremse zur Erreichung eines gewünschten Bremsmoments sehr viel kleiner ausgeführt werden kann als wenn sie an der Abtriebsseite des Planetengetriebes positioniert wäre. Vorzugsweise ist die angesprochene Trommelbremse eine Notbremse und/oder eine Feststellbremse des Kraftfahrzeugs; man kann sie aber auch als Betriebsbremse vorsehen. Ferner ist es möglich, die Bremsbacken der Trommelbremse als Notabstützung des Rotors auszubilden. Da der Radialspalt zwischen der betreffenden Bremsbacke und dem Innenumfang der Bremstrommel problemlos kleiner gemacht werden kann als der Luftspalt des Elektromotors, kann man die Konstruktion so ausführen, dass der Rotor bei Beanspruchung mit mechanischer Überlast eher an einer Bremsbacke anstreift als an dem Stator.

Vorzugsweise ist auf der Außenseite des Radträgers eine mit Reibung arbeitende Betriebsbremse der Antriebseinheit vorgesehen. Die Unterbringung auf der Radträger-Außenseite hat den Vorteil der leichten Zugänglichkeit zum Wechseln der Bremsbeläge bzw. der Bremsklötze.

Vorzugsweise ist der Elektromotor so ausgebildet, dass er als Betriebsbremse der Antriebseinheit benutzbar ist. In der Praxis bedeutet dies vorzugsweise, dass nicht nur eine Elektronik zur Zuführung von Strom zu dem Elektromotor, sondern auch eine Elektronik zur Abführung von Strom aus dem jetzt als Generator arbeitenden "Elektromotor" vorgesehen ist. Diese zwei Funktionen können, müssen aber nicht, durch eine hierfür gemeinsame Elektronikeinheit, im Extrem sogar dual benutzbare Stromsteller, verwirklicht werden. Der beim Bremsen erzeugte Strom wird entweder in ein Stromnetz zurückgespeist oder in einem Stromspeicher gespeichert oder in Bremswiderständen in Wärme umgewandelt. Es ist möglich, zwei alternative oder sich ergänzende Betriebsbremsen vorzusehen, die eine als mit Reibung arbeitende Betriebsbremse und die andere als elektrisch arbeitende Betriebsbremse.

An dieser Stelle sei betont, dass dann, wenn ein Kraftfahrzeug mehrere Antriebseinheiten besitzt, vorzugsweise für den Elektromotor jeder Antriebseinheit eine eigene Stromversorgungselektronik vorgesehen ist.

Bei der erfindungsgemäßen Antriebseinheit kann man sich zwischen zwei Auslegungsprinzipien entscheiden. Entweder man möchte innerhalb der axialen Dimension der Reifenfelge eine Bremse unterbringen. Dann erweist sich von großem Vorteil, dass die eigentliche Antriebseinheit (Elektromotor plus Planetengetriebe) axial sehr kompakt baut, also in vielen Fällen axial neben der Bremse noch innerhalb der axialen Dimension der Reifenfelge untergebracht werden kann. Oder man verzichtet auf die Unterbringung einer mit Reibung arbeitenden Betriebsbremse axial neben der eigentlichen Antriebseinheit. Dann kann man die eigentliche Antriebseinheit axial relativ breit bauen, insbesondere so dass sie mindestens 75%, stärker bevorzugt 80 bis 100%, der axialen Dimension der Reifenfelge einnimmt. Derartige Ausführungen sind besonders sinnvoll, wenn man den Elektromotor als Betriebsbremse ausbildet. Alternativ oder zusätzlich ist es möglich, die schon weiter vorne angesprochene, am Rotor integrierte Trommelbremse als Betriebsbremse auszubilden.

Vorzugsweise ist die Drehmomentübertragungsverbindung zwischen dem Rotor und dem Sonnenrad oder die Drehmomentübertragungsverbindung zwischen dem Planetenradträger und dem Radträger trennbar, besonders bevorzugt von außen her ohne Demontage, im Extrem sogar während der Fahrt des Kraftfahrzeugs. Eine einfache Möglichkeit (unter einer ganzen Reihe von bestehenden Möglichkeiten), diese Trennbarkeit zu realisieren, besteht in der axialen Verschiebbarkeit eines Rings, der ein Vielnutprofil am Umfang hat, an einer Stelle, wo zwischen einem inneren Rotationsteil und einem koaxialen, äußeren Rotationsteil Drehmoment übertragen wird. Der Ring kann zwischen einer Koppelstellung und einer Unterbrechungsstellung verschoben werden.

Nach einer besonders wichtigen, bevorzugten Weiterbildung der Erfindung ist der Elektromotor ein Reluktanzmotor, vorzugsweise ein Reluktanzmotor mit elektronisch gesteuerter Stromzuführung. In ihrer reinen Ausführung haben die Rotoren von Reluktanzmotoren längs des Umfangs verteilt eine Reihe von ausgeprägten Polen. Eine Bewicklung oder Dauermagnete sind nicht vorgesehen. Im Zusammenhang mit der erfindungsgemäßen Antriebseinheit hat der Reluktanzmotor bzw. der Rotor eines Reluktanzmotors die Vorteile, dass vergleichsweise höhere Drehzahlen und Luftspaltdurchmesser bewältigbar sind, dass die mechanische Stabilität unproblematisch ist (keine umschließende Rotorbandage erforderlich!), und dass Überhitzungsprobleme kleiner sind. Auch auf die einfache Herstellbarkeit und damit auf den günstigen Preis wird hingewiesen. Angesichts dieser Vorteile werden gewisse prinzipbedingte Schwächen in Kauf genommen, insbesondere das tendenziell niedrigere, gelieferte Drehmoment im Vergleich zu einigen anderen Elektromotortypen. Schließlich wird darauf hingewiesen, dass bei der Ausbildung der Antriebseinheit mit einem Reluktanzmotor ein Schleppbetrieb der betreffenden Antriebseinheit (z.B. weil das gesamte Kraftfahrzeug abgeschleppt wird oder weil eine oder mehrere andere Antriebseinheiten weiterhin das Fahrzeug antreiben und ein defekter Elektromotor einer bestimmten Antriebseinheit "mitgeschleppt" wird) möglich ist, ohne dass eine mechanische Trennung zwischen dem betreffenden Rad und dem betreffenden Rotor erfolgen müsste; im Schleppbetrieb wird keine Spannung im bewickelten Stator induziert. Daraus resultiert, dass mit geringerem Leistungseinsatz geschleppt werden kann und dass - besonders wichtig (!) - auch ohne Kühlung des Elektromotors geschleppt werden kann.

Bei der Erfindung eingesetzte Reluktanzmotoren sind in der Regel mehrphasig bewickelt. Sie sind vorzugsweise längs des Umfangs des Rotors mit nichtgleichbleibender Polteilung ausgeführt.

Vorzugsweise ist der Rotor des Reluktanzmotors zusätzlich mit Dauermagneten ausgestattet, um die Leistungsdichte des Reluktanzmotors bei höheren Drehzahlen zu erhöhen. Dies soll vorzugsweise nicht so weit gehen, dass aus dem reinen Reluktanzmotor (ohne Dauermagnete) zu einem guten Stück schon ein Elektromotor würde, dessen Rotor mit Dauermagneten wechselnder Polung besetzt ist. Die nur ergänzende, nicht sehr weit gehende Ausstattung mit Dauermagneten führt dazu, dass auch bei höheren Drehzahlen noch hohe Drehmomente erzeugt werden können. Dies spiegelt sich auch wieder in hohen Bremsmomenten bei der Nutzung des Elektromotors als Bremse.

Vorzugsweise ist der Stator als geblechter Stator und/oder der Rotor als geblechter Rotor ausgeführt, um die Wirbelstromverluste zu reduzieren.

Nach einer besonders wichtigen, bevorzugten Weiterbildung der Erfindung ist der Stator als wassergekühlter Stator ausgeführt. Eine besonders 'bevorzugte Möglichkeit ist die Einfügung von axial verlaufenden Edelstahlröhrchen geringer Wanddicke in axial verlaufenden Nuten am Außenumfang des Stators, wobei diese Röhrchen von Kühlflüssigkeit durchströmt werden. Bei dieser Positionierung von Kühlflüssigkeit-Röhrchen nimmt die Kühlflüssigkeit nicht nur Wärme aus dem Statoreisen auf, sondern auch Wärme aus dem umschließenden Motorgehäuse. Wenn Wärme aus dem Planetengetriebe über das Getriebegehäuse zum Motorgehäuse geleitet wird, nimmt die Kühlflüssigkeit somit auch Wärme aus dem Planetengetriebe auf. Bei höheren Anforderungen an die Kühlung kann man weitere Kühlkanäle im Stator vorsehen. Alle Kühlkanäle sind an ein System der Umwälzung der Kühlflüssigkeit mittels Pumpe angeschlossen. An geeigneter Stelle des Kühlmittelkreislaufs, z.B. an der Außenseite des Motorgehäuses oder am Fahrzeug, befindet sich ein Wärmetauscher, um die Wärme letztlich an die Umgebungsluft abzugeben.

Wie schon angedeutet, ist es bevorzugt, dass das Planetengetriebe mindestens zum Teil dadurch gekühlt ist, dass Wärmeleitungsverbindung zu dem Motorgehäuse besteht und von dort aus direkte oder indirekte Wärmeabfuhr an die Umgebung erfolgt.

Im Rotor entsteht erheblich weniger Wärme als im Stator. Vorzugsweise ist der Rotor mit Luftumwälzung luftgekühlt und weist das Motorgehäuse und/oder der Stator einen Oberflächenbereich zur Wärmeaufnahme aus der umgewälzten Luft auf, so dass die Wärme letztlich von dort aus weiter abgeführt werden kann. Dieser Oberflächenbereich kann z.B. ein Bereich aus besonders gut wärmeleitendem Metall und/oder ein Bereich mit Oberflächenvergrößerung sein.

Vorzugsweise sind die Lager des Rotors und das Planetengetriebe und ggf. die Lager des Radträgers mit gemeinsamem Öl geschmiert. Bei der erfindungsgemäßen Antriebseinheit ist diese gemeinsame Schmierung konstruktiv besonders gut machbar. Die Wärmeabfuhr aus dem Schmieröl erfolgt vorzugsweise über das Getriebegehäuse und von dort teils an die Umgebung und teils an das Motorgehäuse.

Vorzugsweise weist die Antriebseinheit eines oder mehrere Steckanschlusselemente für elektrische Verbindung und/oder Kühlflüssigkeitsverbindung mit dem Kraftfahrzeug auf.

Vorzugsweise weist die Antriebseinheit eine Reifendruckregelanlage auf, um den Reifendruck wahlweise erhöhen oder erniedrigen zu können. Eine Druckluftleitung zu der Felge kann durch eine Bohrung des weiter oben beschriebenen Achsstummels geführt sein, ebenso eine Hydraulikleitung oder eine elektrische Leitung zu der ggf. auf der dem Elektromotor abgewandten Seite des Gebtriebes vorgesehenen Bremse der Antriebseinheit.

Es wird betont, dass es im Rahmen der Erfindung möglich ist, die im Anfangsabsatz dargestellte Antriebseinheit ohne das dort genannte Merkmal (g) auszuführen. In diesem Fall kann es ratsam sein, muss aber nicht, eines oder mehrere der in der vorliegenden Anmeldung offenbarten Merkmale hinzu zu nehmen, um eine neue und erfinderische Antriebseinheit zu definieren.

Ein weiterer Gegenstand der Erfindung ist ein Kraftfahrzeug, welches mit mindestens einer Antriebseinheit ausgerüstet ist, die gemäß den vorstehenden Ausführungen ausgebildet ist.

Die Erfindung und bevorzugte Ausgestaltungen der Erfindung werden nachfolgend anhand eines zeichnerisch dargestellten Ausführungsbeispiels noch näher erläutert:

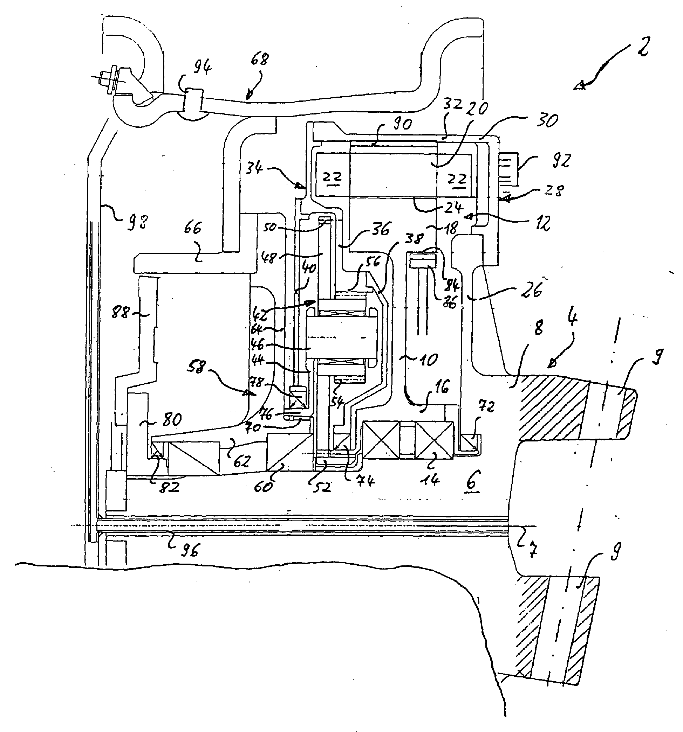

Die einzige Zeichnungsfigur zeigt eine Antriebseinheit im vertikalen Achsenschnitt, wobei nur die obere Hälfte der Antriebseinheit dargestellt ist und die untere, bis auf einige Einzelheiten spiegelbildliche Hälfte weggelassen ist.

Die gesamte Antriebseinheit 2 wird von einem Achsstummel-Bauteil 4 getragen, welche einstückig den kräftigen, zylindrischen, eigentlichen Achsstummel 6 und eine Basis 8 mit zwei Bohrungen 9 aufweist. Mittels der Basis 8 lässt sich die gesamte Antriebseinheit 2 an einem nicht gezeichneten Fahrzeug befestigen. Durch Schwenken um die gemeinsame Achse der genannten Bohrungen 9 lässt sich das mit der Antriebseinheit 2 ausgestattete Rad des Fahrzeugs lenken.

Mehr rechts ist auf dem Achsstummel 6 ein Rotor 10 eines Elektromotors 12 mit zwei Wälzlagern 14 gelagert. Der Rotor 10 hat ― grob gesprochen ― die Gestalt einer Scheibe mit zentraler Öffnung. Um diese zentrale Öffnung herum ist Rotor 10 in Axialrichtung zur Ausbildung einer Nabe 16 vergrößert. In seinem radial äußeren Bereich 18 ist der Rotor 10 ebenfalls axial vergrößert. In dem radial äußeren Bereich 18 sind nach radial außen vorragende Rotorpole ausgebildet, die durch axial verlaufende Nuten voneinander separiert sind und durch einen gemeinsamen Rücken radial innen miteinander verbunden sind. Der radial äußere Bereich 18 ist geblecht ausgeführt, d.h. er besteht aus einer gestapelten Anzahl von Blechen, die jeweils in einer Radialebene quer zur Zentralachse 20 der Antriebseinheit 2 liegen und elektrisch voneinander isoliert sind.

Der Rotor 10 ist Bestandteil des Reluktanz-Elektromotors 12. Der Elektromotor 12 weist radial außerhalb des Rotors 10 einen Stator 20 auf, der analog wie der Rotor 10 geblecht ist. Auch der Stator 20 weist ausgeprägte Pole mit Nuten zwischen den Polen und radial außen einem verbindenden Statorrücken auf. Die Statorpole sind mit Spulen bewickelt, wobei man in der Zeichnung die sog.

Wickelköpfe 22 erkennt, die dadurch entstehen, dass die Wicklungsdrähte an dem dortigen Axialende aus einer Nut austreten und umbiegend in eine andere Nut hineingeführt sind. Die Wickelköpfe 22 gehen an jedem Axialende um eine Dimension a in Axialrichtung über das Statoreisen hinaus. Zwischen dem Innenumfang des Stators 20 und dem Außenumfang des Rotors 10 befindet sich ein Luftspalt 24.

Ein Motorgehäuse 28 besteht im wesentlichen aus den folgenden Bestandteilen: Das Achsstummel-Bauteil 4 ist in dem Bereich zwischen dem Rotor 10 und den Bohrungen 9 zu einem scheibenartigen Bereich 26 erheblich vergrößerten Durchmessers ausgeführt, der einen Großteil der dortigen Stirnwand des Motorgehäuses 28 bildet. Ein zweiter Teil des Motorgehäuses 28 wird durch ein napfartiges Bauteil 30, welches eine große Zentralöffnung hat, gebildet. Der zentral offene Boden des Bauteils 30 wird im zusammengebauten Zustand durch den scheibenartigen Bereich 26 geschlossen; der Restbereich des Bodens bildet einen ringförmigen, äußeren Teil der dortigen Stirnwand des Motorgehäuses 28. Die Umfangswand des napfförmigen Bauteils 30 bildet die Umfangswand 32 des Motorgehäuses 28.

In der Zeichnungsfigur links schließt sich an die ganz offene Seite des napfförmigen Bauteils 30 ein Getriebegehäuse 34 an. Das Getriebegehäuse 34 besteht im wesentlichen aus drei Bauteilen: (1) Einem Hauptteil 36, welches von dem Anschluss an das napfförmige Bauteil 30 des Motorgehäuses 28 radial nach innen führt und dabei an zwei Stellen nach rechts abgekröpft ist. (2) Einem rechten, deckelartigen Bauteil 38, welches weiter nach radial innen geführt ist bis zu einer zentralen Öffnung des Getriebegehäuses 34. (3) Einem linken, deckelartigen Bauteil 40, welches auf der linken Seite eines Planetengetriebes 42 nach radial innen bis zu einer zentralen Öffnung geführt ist.

Der Hauptbestandteil 36 des Getriebegehäuses 34 schließt in seinem radial äußeren Bereich den Elektromotor 12, konkret dessen Stator 20, nach links hin ab. Radial innerhalb des in der Zeichnungsfigur linken Wickelkopfes 22 biegt der Hauptteil 36 nach rechts hin ab, um dann kurz vor dem radial äußeren Bereich 18 des Rotors 10 wieder in radialen Verlauf überzugehen. Radial innerhalb des Bereichs 18 des Rotors 10 verbreitert sich der Hauptteil 36 in Axialrichtung nach rechts. Dort schließt sich das rechte, deckelartige Bauteil 38 an, welches das Getriebegehäuse auf der rechten Seite des Planetengetriebes 42 fortsetzt. Das linke, deckelartige Bauteil 40 schließt das Planetengetriebe 42 auf seiner linken Seite ab.

Das Hauptteil 36 und das rechte, deckelartige Bauteil 38 sind somit einerseits Bestandteile des Getriebegehäuses 34, andererseits schließen sie aber auch den Innenraum des Elektromotors 12 auf seiner linken Seite ab.

Im Inneren des Planetengetriebes 42 befindet sich ein Planetenträger 44, der über den Umfang verteilt mehrere, axial verlaufende Bolzen 46 trägt. Auf jedem Bolzen ist ein Stufenplanetenrad 48 drehbar gelagert. Der durchmessergrößere Teilbereich jedes Stufenplanetenrads 48 ist an seinem Außenumfang mit einer Verzahnung 50 versehen. Die Verzahnung 50 kämmt mit einem weiter unten noch genauer zu beschreibenden Sonnenrad 52. Der durchmesserkleinere Bereich jedes Stufenplanetenrads 48, der axial rechts neben dem durchmessergrößeren Bereich liegt, ist an seinem Außenumfang mit einer Verzahnung 54 versehen. Die Verzahnung 54 kämmt mit einem innenverzahnten, feststehenden Hohlrad 56, welches entweder einstückig in dem Hauptteil 36 des Getriebegehäuses 34 ausgearbeitet ist oder als gesondertes Teil dort eingesetzt ist.

Das bereits angesprochene Sonnenrad 52 ist ein ― grob gesprochen ― hohlzylindrisches Bauteil, das innen von dem Achsstummel 6 durchsetzt wird. Auf einer rechten Teillänge ist das Sonnenrad in eine Zentralbohrung des Nabenbereichs 16 des Rotors eingeschoben und dort drehfest mit dem Rotor 10 verbunden. In einem linken Teilbereich der Länge ist das Sonnenrad mit einer Außenverzahnung 52 versehen und kämmt, wie bereits angesprochen, mit allen umfangsmäßig verteilten Stufenplanetenrädern 48.

Durch die beschriebenen Bauteile Sonnenrad 52, Stufenplanetenräder 48, feststehendes Hohlrad 56, rotierbarer Planetenträger 44 ist das Planetengetriebe 42 gebildet. Man sieht, daß die Zähne 50 der Planetenräder 48, mit denen sie mit dem Sonnenrad 52 in Eingriff sind, weniger weit nach links in der Zeichnungsfigur reichen, als die linken Wickelköpfe 22 des Stators 20 des Elektromotors 12. Die Zähne 50 befinden sich axial neben dem radial äußeren Bereich 18, der den an den Luftspalt 24 anschließenden Bereich des Rotors 10 darstellt. Diejenigen Zähne 50, die sich in der Zeichnungsfigur ganz oben befinden, befinden sich in einem radialen Abstand von der Zentralachse 7, der kleiner als der Radius des Luftspalts 24, aber größer als der Radius beim Übergang vom radial äußeren Bereich 18 des Rotors 10 in den scheibenartigen Bereich des Rotors 10 ist.

Man kann sich auch eine zylindrische Hüllfläche vorstellen, welche alle-größten Durchmesser aller Planetenräder 40 außen umschließt, also jede einzelne Verzahnung 50 eines einzelnen Planetenrads 48 nur für ein kurzes umfangsmäßiges Stück berührt. Dieser Hüllfläche kann man einen Durchmesser bzw. einen Radius zuschreiben und eine axiale Breite, welche der axialen Breite der Verzahnung 50 entspricht. Diese gedachte Hüllfläche liegt gleichsam innerhalb des Winkelraums, welcher axial rechts durch den radial äußeren Bereich 18 bzw. die zwischengesetzte Wand des Gehäusehauptteils 36 begrenzt wird und der radial außen durch den Innenumfang der Gesamtheit der linken Wickelköpfe 22 bzw. den dort zwischengesetzten Bereich des Gehäusehauptteils 36 begrenzt ist. Ohne den Bereich der Erfindung zu verlassen, kann die Ausbildung des Planetengetriebes 42 auch so sein, daß die Planetenräder 48 ein Stück weiter nach links reichen, also die Verzahnungen 50 mit ihren linken Endbereichen weiter nach links ragen als die linken Wickelköpfe 22.

Links von den Planetenrädern 48 ist auf dem Achsstummel 6 ein Radträger 58 gelagert, und zwar mittels zweier beabstandeter Wälzlager 60. Der Radträger 58 besteht aus einem Nabenbereich 62 und einem scheibenartigen Bereich 64. An dem scheibenartigen Bereich 64 sind eine Bremstrommel 66 und eine Reifenfelge 68 befestigt. Ein bei betriebsfertiger Antriebseinheit 2 auf der Felge 68 befindlicher Reifen ist nicht eingezeichnet.

Rechts hat der Nabenbereich 62 des Radträgers 58 einen Bereich, der über den scheibenartigen Bereich 64 vorragt und an seinem Außenumfang mit einem axial verlaufenden Vielnutprofil 70 versehen ist. Der Planetenträger 44 besitzt in seiner Innenbohrung ein komplementäres Vielnutprofil und ist mit diesem auf das Vielnutprofil 70 des Radträgers 58 aufgeschoben. Dies schafft eine drehmomentübertragende Verbindung zwischen dem Planetenträger 44 und dem Radträger 58.

Im rechten Endbereich des Nabenbereichs 16 des Rotors 10 ist ein Simmerring 72 positioniert, der den Innenraum des Motorgehäuses 28 gegenüber der Lagerung des Rotors 10 abdichtet. Im linken Endbereich des Nabenbereichs 16 des Rotors 10 ist ein Simmerring 74 positioniert, der den Innenraum des Elektromotors 12 gegenüber dem Innenraum des Planetengetriebes 42 abdichtet. Der Simmerring 72 befindet sich zwischen dem Nabenbereich 16 des Rotors 10 und dem Achsstummel-Bauteil 4. Der Simmerring 74 befindet sich zwischen dem Nabenbereich 16 des Rotors 10 und der Innenbohrung des rechten Deckelteils 38. Zwischen der Innenbohrung des linken Deckelteils 40 und dem Außenumfang eines nach links ragenden, axialen Fortsatzes 76 des Planetenträgers 44 befindet sich ein Simmerring 78, der das Innere des Planetengetriebes 42 gegenüber der äußeren Umgebung abdichtet. Zwischen dem Nabenbereich 58 und einem auf dem linken Endbereich des Achsstummels 6 drehfest befestigten Bauteil 80 befindet sich ein Simmerring 82, der den Lagerraum des Radträgers 58 gegenüber der äußeren Umgebung abdichtet. Der mit dem Planetenträger 44 zusammenwirkende Simmerring 78 befindet sich an einer Stelle, die radial größer ist als das rechte Lager des Radträgers 58, aber über dieses Lager 60 weder nach axial links noch nach axial rechts hinausgeht.

Ferner ist zu sehen, daß der Innenumfang des radial äußeren Bereichs 18 des Rotors 10 dort, wo er sich rechts von dem scheibenartigen Bereich des Rotors 10 befindet, als Bremstrommel 84 ausgebildet ist. Zusammen mit Bremsbacken 86 wird dort eine Not- und Feststellbremse für das Fahrzeug gebildet. Ein Seilzug oder auch eine Hydraulikleitung zur Betätigung der Trommelbremse 84, 86 kann bequem durch den scheibenförmig vergrößerten Bereich 26 des Achsstummel-Bauteils 4 geführt werden.

Am linken Ende des Achsstummels 6 ist drehfest das schon weiter oben angesprochene Bauteil 80 befestigt. An dem Bauteil 80 ist ein Bremsträger 88 befestigt. An dem Bremsträger 88 sind die nicht rotierenden Bestandteile einer nicht eingezeichneten Betriebsbremse der Antriebseinheit 2 befestigt. Die Bremsbacken dieser Betriebsbremse wirken von innen her gegen den Innenumfang der rotierenden Bremstrommel 66. Durch Abbau des Bremsträgers 88 nach links ist die Betriebsbremse für Bremsbelagwechsel offen.

Das napfförmige Bauteil 30 kann man nach Lösen von Verbindungsschrauben mit dem scheibenförmig vergrößerten Bereich 26 und nach Lösen von Verbindungsschrauben mit dem Hauptteil 36 des Getriebegehäuses 34 axial nach rechts von der Antriebseinheit 2 wegnehmen. Dabei wird der Stator 20 mit demontiert. Der scheibenförmige Bereich 26 hat einen Außendurchmesser, der so klein ist, daß man auch einen radial äußeren Bereich des Rotors 10 axial nach rechts hin demontieren kann.

Radial außen am Stator 20 ist ein axial verlaufendes Metallröhrchen 90 in übertriebener Größe eingezeichnet. Das Röhrchen 90 sitzt in einer äußeren, axial verlaufenden Nut am Außenumfang des Stators 20 und reicht in eine innere, in Axialrichtung verlaufende Nut des Umfangsbereichs 32 des Motorgehäuses 28. Über den Umfang des Stators 20 verteilt sind eine Vielzahl derartiger Röhrchen 90 positioniert. Sie sind alle z.B. mit ihrem linken Ende an eine Kühlmittelzuführung und ihrem rechten Ende an eine Kühlmittelabführung angeschlossen.

Mittel für eine Luftumwälzung innerhalb des Motorgehäuses 28 sind nicht eingezeichnet. Möglich sind z.B. ventilatorflügelartige Fortsätze an geeigneter Stelle des Rotors 10.

An der rechten Stirnwand des Motorgehäuses 28 erkennt man ein Steckanschlußelement 92, wo mit einem oder mehreren Steckverbindern elektrische Verbindungen zwischen dem Stator 20 und dem rechts von der Zeichnungsfigur befindlichen Karosseriekörper des Fahrzeugs sowie Kühlmittelverbindungen zwischen dem Stator 20 und dem Karosseriekörper des Fahrzeugs hergestellt werden können. Außerdem ist schematisiert ein Reifendruckregelventil 94 in der Felge 68 eingezeichnet. Eine Druckluftleitung 96 läuft durch eine Zentralbohrung des Achsstummel-Bauteils 4 und dann ab einer rotierbaren Verbindung durch ein radkappenartiges Bauteil 98 zu dem Reifendruckregelventil 94. Durch die Zentralbohrung des Achsstummel-Bauteils 4 ist auch der elektrische oder hydraulische oder pneumatische Anschluß der Bremsanlage an dem Bremsträger 88 hergestellt.

Das Ausführungbeispiel hat vor Augen geführt, dass die Erfindung eine äußerst günstige Art der Lagerung von Rotor 10 und Radträger 58 erlaubt. Der Rotor 10 und Radträger 58 sind jeweils beidseitig von der Ebene gelagert, in der die radiale Kraft angreift.

Günstige Trennstellen von Drehmomentübertragungsverbindungen sind bei dem Ausführungsbeispiel die Vielnutverbindung zwischen dem Rotor 10 und dem Sonnenrad 52 und die Vielnutverbindung zwischen dem Planetenträger 44 und dem Radträger 58.

Es wird ausdrücklich betont, dass eine Flüssigkeitskühlung des Stators eines Elektromotors mittels Röhrchen, vorzugsweise aus Metall, die sich im Bereich des Statorrücken-Umfangs entfernt von dem Luftspalt des Elektromotors befinden (wie bei dem Ausführungsbeispiel in einer bevorzugten Ausführungsform abgehandelt), auch für sich erfinderische Bedeutung hat, also losgelöst von der im Anfangsabsatz der Anmeldung angesprochenen Antriebseinheit und den sonstigen, in der Anmeldung offenbarten Merkmalen. Andererseits weist diese Flüssigkeitskühlung vorzugsweise eines oder mehrere der weiteren, in der Anmeldung offenbarten Merkmale auf.

## Patentansprüche

1. Elektrische Antriebseinheit für ein Kraftfahrzeug, die aufweist:
(a) einen Elektromotor (12) mit einem drehfest festgelegten Motorgehäuse (28);
(b) einen in dem Motorgehäuse (28) befestigten Stator (20) des Elektromotors (12), wobei der Stator (20) bewickelte Pole aufweist;
(c) einen innerhalb des Stators (20) angeordneten Rotor (10) des Elektromotors (12), wobei zwischen den Polflächen des Stators (20) und dem den Polflächen des Stators (20) zugewandten Außenumfang des Rotors (10) ein Luftspalt (24) besteht;
(d) ein Planetengetriebe (42) mit einem Sonnenrad (52), einem Planetenträger (44), Planetenrädern (48) und einem Hohlrad (56),
(e) wobei der Rotor (10) des Elektromotors (12) und das Sonnenrad (52) des Planetengetriebes (44) für Drehmomentübertragung in Verbindung stehen; und
(f) ein Getriebegehäuse (34) des Planetengetriebes (42), wobei das Getriebegehäuse (34) an dem Motorgehäuse (28) befestigt ist oder - mindestens zum Teil - ein integraler Bestandteil des Motorgehäuses (28) ist,
(g) wobei die Planetenräder Stufenplanetenräder (48) mit einem durchmessergrößeren, eine Verzahnung (50) aufweisenden, ersten Teilbereich und einem durchmesserkleineren, eine Verzahnung (54) aufweisenden, zweiten Teilbereich sind, wobei die Verzahnungen (50) der ersten Teilbereiche der Stufenplanetenräder (48) mit dem Sonnenrad (52) kämmen und die Verzahnungen (54) der zweiten Teilbereiche der Stufenplanetenräder (48) mit dem Hohlrad (56) kämmen;
(h) wobei die Stufenplanetenräder (48) einen derartigen größten Durchmesser und eine derartige axiale Positionierung haben, dass sich ein gedachter gemeinsamer Hüllzylinder für alle größten Durchmesser der ersten Teilbereiche der Stufenplanetenräder (48) radial innerhalb der an einer Axialseite des Stators (20) vorhandenen Wickelköpfe (22) befindet;
**dadurch gekennzeichnet**,
(i) dass die Stufenplanetenräder (48) einen derartigen größten Durchmesser und eine derartige axiale Positionierung haben, dass sich der gedachte gemeinsamer Hüllzylinder für alle größten Durchmesser der ersten Teilbereiche der Stufenplanetenräder (48) axial neben dem an den Luftspalt (24) anschließenden, radial äußeren Bereich (18) des Rotors (10) befindet und dass die ersten Teilbereiche der Stufenplanetenräder (48) entweder gar nicht oder mit weniger als 50% ihrer Zahnbreite des Eingriffs mit dem Sonnenrad (52) in Axialrichtung nach außen über die genannten Wickelköpfe (22) hinausragen; und
(k) dass die Stufenplanetenräder (48) mit ihren zweiten Teilbereichen in einen Raum des Rotors (10) ragen, der gegenüber der Stirnseite des Rotors, die an dem an den Luftspalt (24) anschließenden, radial äußeren Bereich (18) des Rotors (10) gegeben ist, axial zurückgesetzt ist.

2. Antriebseinheit nach Anspruch 1,
**dadurch gekennzeichnet, dass** bei dem Planetengetriebe (42) das Hohlrad (56) drehfest ist und der rotierbare Planetenradträger (44) für den Getriebeabtrieb vorgesehen ist.

3. Antriebseinheit nach Anspruch 1 oder 2,
**dadurch gekennzeichnet, dass** ein Achsstummel (6) vorgesehen ist, an dem das Motorgehäuse (28) befestigt ist und/oder mit dem das Motorgehäuse (28) - mindestens zum Teil - ein integrales Bauteil ist; und dass der Rotor (10) auf dem Achsstummel (6) gelagert ist.

4. Antriebseinheit nach Anspruch 3,
**dadurch gekennzeichnet, dass** das Sonnenrad (52) ein außenverzahntes Hohlrad ist, welches der Achsstummel (6) durchsetzt.

5. Antriebseinheit nach Anspruch 3 oder 4,
**dadurch gekennzeichnet, dass** auf dem Achsstummel (6), in einer Position axial neben dem Elektromotor (12) und dem Planetengetriebe (42), ein Radträger (58) drehbar gelagert ist.

6. Antriebseinheit nach Anspruch 5,
**dadurch gekennzeichnet, dass** an dem Radträger (58) eine Reifenfelge (68) befestigt ist.

7. Antriebseinheit nach Anspruch 5 oder 6,
**dadurch gekennzeichnet, dass** die Abdichtung zwischen einem rotierbaren Teil (44) an der Abtriebsseite des Planetengetriebes (42) und dem Getriebegehäuse (34) an einer Stelle positioniert ist, die radial weiter außen als ein Lager (60) des Radträgers (58) ist, wobei die Abdichtung (78) nicht axial über dieses Lager (60) hinausragt.

8. Antriebseinheit nach einem der Ansprüche 1 bis 7,
**dadurch gekennzeichnet, dass** ein Teil (30) des Motorgehäuses (28), der die Außenumfangswand (32) und einen radial äußeren Bereich einer Stirnwand enthält, von der Antriebseinheit (2) demontierbar ist, so dass der Stator (20) mit demontiert wird und, vorzugsweise, ein radial äußerer Bereich des Rotors (10) anschließend von der Antriebseinheit (2) demontierbar ist.

9. Antriebseinheit nach einem der Ansprüche 1 bis 8,
**dadurch gekennzeichnet, dass** ein Bereich des Rotors (10), der auf der anderen Axialseite des Rotors (10) als das Planetengetriebe (42) liegt, als Trommel (84) einer Trommelbremse ausgebildet ist.

10. Antriebseinheit nach Anspruch 9,
**dadurch gekennzeichnet, dass** die Bremsbacken (86) der Trommelbremse als Notabstützung des Rotors (10) ausgebildet sind.

11. Antriebseinhelt nach einem der Ansprüche 5 bis 10,
**dadurch gekennzeichnet, dass** auf der Außenseite des Radträgers (58) eine mit Reibung arbeitende Betriebsbremse der Antriebseinheit (2) vorgesehen ist.

12. Antriebseinheit nach einem der Ansprüche 1 bis 11,
**dadurch gekennzeichnet, dass** der Elektromotor (12) so ausgebildet ist, dass er als Betriebsbremse der Antriebseinheit (2) benutzbar ist.

13. Antriebseinheit nach Anspruch 12,
**dadurch gekennzeichnet, dass** die axiale Dimension der Einheit aus Elektromotor (12) und Planetengetriebe (42) mindestens 75% der axialen Dimension der Reifenfelge (68) beträgt, vorzugsweise 80 bis 100%.

14. Antriebseinheit nach einem der Ansprüche 1 bis 13,
**dadurch gekennzeichnet, dass** die Drehmomentübertragungsverbindung zwischen dem Rotor (10) und dem Sonnenrad (52) oder die Drehmomentübertragungsverbindung zwischen dem Planetenradträger (44) und dem Radträger (58) trennbar ist, vorzugsweise von außen her ohne Demontage.

15. Antriebseinheit nach einem der Ansprüche 1 bis 14,
**dadurch gekennzeichnet, dass** der Elektromotor (12) ein Reluktanzmotor ist, vorzugsweise mit elektronisch gesteuerter Stromzuführung.

16. Antriebseinheit nach Anspruch 15,
**dadurch gekennzeichnet, dass** der Rotor (10) des Reluktanzmotors zusätzlich mit Dauermagneten ausgestattet ist, um die Leistungsdichte des Reluktanzmotors bei höheren Drehzahlen zu erhöhen.

17. Antriebseinheit nach einem der Ansprüche 1 bis 16, dadurch-gekennzeichnet, dass der Stator (20) wassergekühlt ist.

18. Antriebseinheit nach einem der Ansprüche 1 bis 17,
**dadurch gekennzeichnet, dass** der Stator (20) an seinem Außenumfang axial verlaufende, von Kühlflüssigkeit durchströmbare Röhrchen (90) aufweist.

19. Antriebseinheit nach einem der Ansprüche 1 bis 18,
**dadurch gekennzeichnet, dass** das Planetengetriebe (42) mindestens zum Teil dadurch gekühlt ist, dass Wärmeleitungsverbindung zu dem Motorgehäuse (28) besteht und von dort aus direkte oder indirekte Wärmeabfuhr an die Umgebung erfolgt.

20. Antriebseinheit nach einem der Ansprüche 1 bis 19,
**dadurch gekennzeichnet, dass** der Rotor (10) luftgekühlt mit Luftumwälzung ist und dass das Motorgehäuse (28) und/oder der Stator (20) einen Oberflächenbereich zur Wärmeaufnahme aus der umgewälzten. Luft aufweist.

21. Antriebseinheit nach einem der Ansprüche 1 bis 20,
**dadurch gekennzeichnet, dass** die Lager (14) des Rotors (10) und das Planetengetriebe (42) und ggf. die Lager (60) des Radträgers (58) mit gemeinsamem Öl geschmiert sind.

22. Antriebseinheit nach einem der Ansprüche 1 bis 21,
**gekennzeichnet durch** ein Steckanschlusselement (92) für elektrische Verbindung und/oder Kühlflüssigkeitsverbindung mit dem Kraftfahrzeug.

23. Kraftfahrzeug,
**dadurch gekennzeichnet, dass** es mit mindestens einer Antriebseinheit (2) ausgerüstet ist, die gemäß einem der Ansprüche 1 bis 22 ausgebildet ist.

## Claims

1. An electric drive unit for a motor vehicle, comprising:
(a) an electric motor (12) having a motor housing (28) fixed in non-rotatable manner;
(b) a stator (20) of said electric motor (12), with the stator (20) being mounted in the motor housing (28) and having coil-wound poles;
(c) a rotor (10) of the electric motor (12) arranged internally of the stator (20), with an air gap (24) being present between the pole faces of the stator (20) and the outer periphery of the rotor (10) facing said pole faces of the stator (20);
(d) a planetary gear system (42) having a sun wheel (52), a planet carrier (44), planet wheels (48) and a ring gear (56),
(e) the rotor (10) of the electric motor (12) and the sun wheel (52) of the planetary gear system (44) being coupled for torque transmission; and
(f) a gear casing (34) of the planetary gear system (42), the gear casing (34) being attached to the motor housing (28) or - at least in part - being an integral component part of the motor housing (28),
(g) the planet wheels being stepped planet wheels (48) having a first portion of larger diameter with a toothed portion (50) and a second portion of smaller diameter with a toothed portion (54), the toothed portions (50) of said first portions of the stepped planet wheels (48) meshing with the sun wheel (52) and the toothed portions (54) of said second portions of the stepped planet wheels (48) meshing with the ring gear (56);
(h) the stepped planet wheels (48) having such a maximum diameter and such axial positioning that an imaginary common envelope cylinder for all maximum diameters of said first portions of the stepped planet wheels (48) is located radially inside of the winding heads (22) present on an axial side of the stator (20);
**characterized in that**
(i) the stepped planet wheels (48) have such a maximum diameter and such axial positioning that the imaginary common envelope cylinder for all maximum diameters of said first portions of the stepped planet wheels (48) is located axially beside the radially outer portion (18) of the rotor (10) adjoining the air gap (24) and that said first portions of the stepped planet wheels (48) project in axial direction outwardly beyond said winding heads (22) either not at all or with less than 50 % of their tooth width in engagement with the sun wheel (52); and
(k) that the stepped planet wheels (48) have their second portions project into a space of the rotor (10) which is axially recessed from the face side of the rotor present at the radially outer portion (18) of the rotor (10) adjoining the air gap (24).

2. A drive unit according to claim 1,
**characterized in that** the ring gear (56) of the planetary gear system (42) is non-rotatable and the rotatable planet carrier (44) is provided for transmission output.

3. A drive unit according to claim 1 or 2,
**characterized in that** there is provided a stub axle (6) on which the motor housing (28) is mounted and/or with which the motor housing (28) - at least in part - forms an integral component; and that the rotor (10) is supported on the stub axle (6).

4. A drive unit according to claim 3,
**characterized in that** the sun wheel (52) is an externally toothed hollow wheel having the stub axle (6) extending therethrough.

5. A drive unit according to claim 3 or 4,
**characterized in that** a wheel carrier (58) is rotatably supported on the stub axle (6) in a position axially beside the electric motor (12) and the planetary gear system (42).

6. A drive unit according to claim 5,
**characterized in that** the wheel carrier (58) has a tire rim (68) mounted thereon.

7. A drive unit according to claim 5 or 6,
**characterized in that** the sealing between a rotatable part (44) on the output side of the planetary gear system (42) and the gear casing (34) is positioned at a location radially further outside than a bearing (60) of the wheel carrier (58), with the sealing (78) not projecting beyond this bearing (60) in axial direction.

8. A drive unit according to any of claims 1 to 7,
**characterized in that** a part (30) of the motor housing (28) containing the outer peripheral wall (32) and a radially outer portion of an end wall is adapted to be detached from the drive unit (2), so that the stator (20) is detached as well and, preferably, a radially outer portion of the rotor (10) is adapted to be then detached from the drive unit (2).

9. A drive unit according to any of claims 1 to 8,
**characterized in that** a portion of the rotor (10) located on the other axial side of the rotor (10) from the planetary gear system (42) is designed in the form of a drum (84) of a drum brake.

10. A drive unit according to claim 9,
**characterized in that** the brake shoes (86) of the drum brake are designed as an emergency supporting means of the rotor (10).

11. A drive unit according to any of claims 5 to 10,
**characterized in that** a frictional service brake of the drive unit (2) is provided on the outside of the wheel carrier (58).

12. A drive unit according to any of claims 1 to 11,
**characterized in that** the electric motor (12) is designed such that it can be utilized as service brake of the drive unit (2).

13. A drive unit according to claim 12,
**characterized in that** the axial dimension of the unit of electric motor (12) and planetary gear system (42) is at least 75 % of the axial dimension of the tire rim (68), preferably 80 to 100 %.

14. A drive unit according to any of claims 1 to 13,
**characterized in that** the torque transmission connection between the rotor (10) and the sun wheel (52) or the torque transmission connection between the planet carrier (44) and the wheel carrier (58) is adapted to be separated, preferably from the outside without unmounting.

15. A drive unit according to any of claims 1 to 14,
**characterized in that** the electric motor (12) is a reluctance motor, preferably with electronically controlled current supply.

16. A drive unit according to claim 15,
**characterized in that** the rotor (10) of the reluctance motor is provided in addition with permanent magnets so as to increase the power density of the reluctance motor at higher speeds.

17. A drive unit according to any of claims 1 to 16,
**characterized in that** the stator (20) is water-cooled.

18. A drive unit according to any of claims 1 to 17,
**characterized in that** the stator (20), on the outer periphery thereof, has small, axially extending tubes (90) adapted to have cooling liquid flowing therethrough.

19. A drive unit according to any of claims 1 to 18,
**characterized in that** the planetary gear system (42) at least in part is cooled **in that** there is a thermally conductive connection to the motor housing (28) and direct or indirect heat discharge is effected from there to the surroundings.

20. A drive unit according to any of claims 1 to 19,
**characterized in that** the rotor (10) is air-cooled with air circulation, and **in that** the motor housing (28) and/or the stator (20) has a surface portion for taking up heat from the circulating air.

21. A drive unit according to any of claims 1 to 20,
**characterized in that** the bearings (14) of the rotor (10) and the planetary gear system (42) and optionally the bearings (60) of the wheel carrier (58) are lubricated with oil in common.

22. A drive unit according to any of claims 1 to 21,
**characterized by** a connector element (92) for establishing an electrical connection and/or a cooling liquid connection to the motor vehicle.

23. A motor vehicle,
**characterized in that** it is provided with at least one drive unit (2) designed in accordance with any of claims 1 to 22.

## Revendications

1. Unité motrice électrique pour un véhicule automobile, laquelle présente :
(a) un moteur électrique (12) pourvu d'un carter de moteur (28) fixé de manière solidaire en rotation ;
(b) un stator (20) du moteur électrique (12) fixé dans le carter de moteur (28), sachant que le stator (20) présente des pôles enroulés ;
(c) un rotor (10) du moteur électrique (12) disposé à l'intérieur du stator (20), sachant qu'un entrefer (24) se trouve entre les surfaces polaires du stator (20) et le contour extérieur du rotor (10) tourné vers les surfaces polaires du stator (20) ;
(d) un engrenage planétaire (42) pourvu d'un pignon planétaire (52), d'un porte-satellites (44), de satellites (48) et d'une couronne (56),
(e) dans lequel le rotor (10) du moteur électrique (12) et le pignon planétaire (52) de l'engrenage planétaire (44) sont en liaison pour la transmission du couple de rotation ; et
(f) un carter d'engrenage (34) de l'engrenage planétaire (42), sachant que le carter d'engrenage (34) est fixé au niveau du carter de moteur (28) ou fait - au moins en partie - partie intégrante du carter de moteur (28),
(g) sachant que les satellites sont des satellites à gradins (48) dotés d'une première zone partielle de diamètre plus grand, présentant une denture (50) et dotés d'une deuxième zone partielle de diamètre plus petit, présentant une denture (54), sachant que les dentures (50) des premières zones partielles des satellites à gradins (48) s'engrènent avec le pignon planétaire (52) et que les dentures (54) des deuxièmes zones partielles des satellites à gradins (48) s'engrènent avec la couronne (56) ;
(h) sachant que les satellites à gradins (48) présentent un diamètre de plus grande taille tel et un positionnement axial tel qu'un cylindre enveloppant commun de par sa conception pour tous les diamètres de plus grande taille des premières zones partielles des satellites à gradins (48) se trouve radialement à l'intérieur des têtes de bobine (22) présentes au niveau d'un côté axial du stator (20),
caractérisée,
(i) en ce que les satellites à gradins (48) présentent un diamètre de plus grande taille tel et un positionnement axial tel que le cylindre enveloppant commun de par sa conception pour tous les diamètres de plus grande taille des premières zones partielles des satellites à gradins (48) se trouve de manière axiale à côté de la zone (18) radialement extérieure, se trouvant dans le prolongement de l'entrefer (24), du rotor (10), et en ce que les premières zones partielles des satellites à gradins (48) ne dépassent guère ou de moins de 50 % de leur largeur de dent de l'engrènement avec le pignon planétaire (52), desdites têtes de bobine (22) dans la direction axiale vers l'extérieur ; et
(k) en ce que les satellites à gradins (48) dépassent par leurs deuxièmes zones partielles dans un espace du rotor (10), qui est en retrait axialement par rapport au côté frontal du rotor, qui est présent au niveau de la zone (18) radialement extérieure, se trouvant dans le prolongement de l'entrefer (24), du rotor (10).

2. Unité motrice selon la revendication 1,
**caractérisée en ce que** dans le cas de l'engrenage planétaire (42), la couronne (56) est solidaire en rotation, et **en ce que** le porte-satellites (44) pouvant tourner est prévu pour la sortie d'engrenage.

3. Unité motrice selon la revendication 1 ou 2,
**caractérisée en ce qu'**une fusée d'essieu (6) est prévue, au niveau de laquelle est fixé le carter de moteur (28) et/ou dont le carter de moteur (28) fait - au moins en partie - partie intégrante, et **en ce que** le 15rotor (10) est logé sur la fusée d'essieu (6).

4. Unité motrice selon la revendication 3,
**caractérisée en ce que** le pignon planétaire (52) est une couronne dentée à l'extérieur, laquelle est traversée par la fusée d'essieu (6).

5. Unité motrice selon la revendication 3 ou 4,
**caractérisée en ce qu'**un support de roue (58) est logé de manière à pouvoir tourner sur la fusée d'essieu (6) dans une position de manière axiale à côté du moteur électrique (12) et de l'engrenage planétaire (42).

6. Unité motrice selon la revendication 5,
**caractérisée en ce qu'**une jante de pneu (68) est fixée au niveau du support de roue (58).

7. Unité motrice selon la revendication 5 ou 6,
**caractérisée en ce que** le système d'étanchéité est positionné entre une partie (44) pouvant tourner au niveau du côté de sortie de l'engrenage planétaire (42) et le carter d'engrenage (34) en un emplacement qui est situé radialement plus à l'extérieur qu'un palier (60) du support de roue (58), sachant que le système d'étanchéité (78) ne dépasse pas axialement dudit palier (60).

8. Unité motrice selon l'une quelconque des revendications 1 à 7,
**caractérisée en ce qu'**une partie (30) du carter de moteur (28), laquelle contient la paroi périphérique extérieure (32) et une zone radialement extérieure d'une paroi frontale, peut être démontée de l'unité motrice (2) de sorte que le stator (20) est démonté conjointement et que, de préférence, une zone radialement extérieure du rotor (10) peut être démontée immédiatement après de l'unité motrice (2).

9. Unité motrice selon l'une quelconque des revendications 1 à 8,
**caractérisée en ce qu'**une zone du rotor (10), qui se trouve sur l'autre côté axial du rotor (10) que celui de l'engrenage planétaire (42), est réalisée sous la forme d'un tambour (84) d'un frein à tambour.

10. Unité motrice selon la revendication 9,
**caractérisée en ce que** les mâchoires de frein (86) du frein à tambour sont réalisées sous la forme d'un système de soutien d'urgence du rotor (10).

11. Unité motrice selon l'une quelconque des revendications 5 à 10,
**caractérisée en ce qu'**un frein de service fonctionnant par frottement de l'unité motrice (2) est prévu sur le côté extérieur du support de roue (58).

12. Unité motrice selon l'une quelconque des revendications 1 à 11,
**caractérisée en ce que** le moteur électrique (12) est réalisé de telle manière qu'il peut être utilisé comme un frein de service de l'unité motrice (2).

13. Unité motrice selon la revendication 12,
**caractérisée en ce que** la dimension axiale de l'unité constituée du moteur électrique (12) et de l'engrenage planétaire (42) est égale à au moins 75 % de la dimension axiale de la jante de pneu (68), de préférence est comprise entre 80 et 100 %.

14. Unité motrice selon l'une quelconque des revendications 1 à 13,
**caractérisée en ce que** la liaison de transmission de couple de rotation entre le rotor (10) et le pignon planétaire (52) ou la liaison de transmission de couple de rotation entre le porte-satellites (44) et le support de roue (58) peut être défaite, de préférence depuis l'extérieur sans démontage.

15. Unité motrice selon l'une quelconque des revendications 1 à 14,
**caractérisée en ce que** le moteur électrique (12) est un moteur à réluctance, de préférence doté d'une alimentation en courant à commande électronique.

16. Unité motrice selon la revendication 15,
**caractérisée en ce que** le rotor (10) du moteur à réluctance est équipé en plus d'aimants permanents, afin d'augmenter la densité de puissance du moteur à réluctance dans le cas de vitesses de rotation plus élevées.

17. Unité motrice selon l'une quelconque des revendications 1 à 16,
**caractérisée en ce que** le stator (20) est refroidi par eau.

18. Unité motrice selon l'une quelconque des revendications 1 à 17,
**caractérisée en ce que** le stator (20) présente au niveau de sa périphérie extérieure des petits tuyaux (90) s'étendant de manière axiale, pouvant être traversés par un liquide de refroidissement.

19. Unité motrice selon l'une quelconque des revendications 1 à 18,
**caractérisée en ce que** l'engrenage planétaire (42) est au moins en partie refroidi, **en ce qu'**est présente une liaison de conduction de chaleur en direction du carter de moteur (28) et que de là est effectuée une évacuation de chaleur directe ou indirecte vers l'extérieur.

20. Unité motrice selon l'une quelconque des revendications 1 à 19,
**caractérisée en ce que** le rotor (10) est refroidi à l'air avec une circulation d'air, et **en ce que** le carter de moteur (28) et/ou le stator (20) présente une zone de surface servant à l'absorption de chaleur issue de l'air en circulation.

21. Unité motrice selon l'une quelconque des revendications 1 à 20,
**caractérisée en ce que** les paliers (14) du rotor (10) et l'engrenage planétaire (42) et éventuellement les paliers (60) du support de roue (58) sont lubrifiés avec une huile commune.

22. Unité motrice selon l'une quelconque des revendications 1 à 21,
**caractérisée par** un élément de raccordement par enfichage (92) pour une liaison électrique et/ou une liaison de liquide de refroidissement avec le véhicule automobile.

23. Véhicule automobile,
**caractérisé en ce qu'**il est équipé d'au moins une unité motrice (2) qui est réalisée selon l'une quelconque des revendications 1 à 22.
